# EUROPEAN PATENT SPECIFICATION

(11) **EP 1 132 167 B1**
(45) Date of publication and mention of the grant of the patent: **28.04.2004**
(21) Application number: 01301335.4
(22) Date of filing: 15.02.2001
(51) Int. Cl.: B23K 20/12, B23B 3/10, B23P 6/00

(54) **Friction stir welding**
Drehendes Reibungschweissen
Soudage par agitation-friction

(30) Priority: 06.03.2000 JP 2000060202; 19.10.2000 JP 2000318730
(43) Date of publication of application: 12.09.2001
(60) Divisional application: 02025240.9
(73) Proprietor: Hitachi, Ltd., Chiyoda-ku, Tokyo 101-8010 (JP)
(72) Inventor: Ezumi, Masakuni, Kudamatsu-shi, Yamaguchi 744-0002 (JP); Fukuyori, Kazushige, Kudamatsu-shi, Yamaguchi 744-0031 (JP); Mizusaki, Tsuyoshi, Kudamatsu-shi, Yamaguchi 744-0011 (JP)
(74) Representative: Paget, Hugh Charles Edward

(56) References cited:
- EP-A- 0 810 055
- EP-A- 0 888 843
- EP-A- 0 893 189
- GB-A- 2 011 815
- US-A- 5 201 455
- US-A- 5 697 544
- US-A- 5 971 252
- PATENT ABSTRACTS OF JAPAN vol. 1999, no. 11, 30 September 1999 (1999-09-30) & JP 11 170071 A (SHOWA ALUM CORP), 29 June 1999 (1999-06-29)
- PATENT ABSTRACTS OF JAPAN vol. 1999, no. 12, 29 October 1999 (1999-10-29) & JP 11 197855 A (NIPPON LIGHT METAL CO LTD), 27 July 1999 (1999-07-27)
- PATENT ABSTRACTS OF JAPAN vol. 1999, no. 13, 30 November 1999 (1999-11-30) & JP 11 226759 A (SUMITOMO LIGHT METAL IND LTD), 24 August 1999 (1999-08-24)
- PATENT ABSTRACTS OF JAPAN vol. 1999, no. 12, 29 October 1999 (1999-10-29) & JP 11 197856 A (NIPPON LIGHT METAL CO LTD), 27 July 1999 (1999-07-27)
- PATENT ABSTRACTS OF JAPAN vol. 014, no. 287 (M-0988), 21 June 1990 (1990-06-21) & JP 02 089577 A (MITSUBISHI HEAVY IND LTD), 29 March 1990 (1990-03-29)
- PATENT ABSTRACTS OF JAPAN vol. 1998, no. 14, 31 December 1998 (1998-12-31) & JP 10 230372 A (SHOWA ALUM CORP), 2 September 1998 (1998-09-02)

## Description

The present invention relates to a friction stir welding method, a welding body produced by friction stir welding and apparatus for carrying out the method. The invention particularly relates to a circular or other continuous loop path weld.

### Prior Art

As shown in EP-A-0797043, friction stir welding is a method in which by rotating a round rod (here called a "rotary tool") which is inserted into the welding zone and moving the rotary tool along the welding line, the welding zone is heated, softened and plastically fluidised and is solid-state welded.

The rotary tool has a small diameter portion (here called a "pin") which is inserted into the welding zone and a large diameter portion (here called a "shoulder") which is positioned at one end of the small diameter portion. The small diameter portion and the large diameter portion of the rotary tool have the same axis.

In JP-A-11-197855, which is considered to represent the most relevant state of the art, there is disclosed a welding method in which a welding line of two members has a ring shape (a circular shape). After the start end and the finish end of the welding have overlapped, the finish end is terminated inside or outside the welding line. Accordingly, when the friction stir welding is finished and the rotary tool is withdrawn from a member subjected to the welding, a hole corresponding to the pin of the rotary tool is left in the member, causing a strength problem.

Furthermore, the rotary tool is inserted inclined to the surface of the members. The inclination direction relative to the movement direction of the rotary tool is such that the pin of the rotary tool is positioned in a front of the shoulder of the rotary tool. In other words, the rotary tool is inclined rearwardly, as illustrated in EP-B-0752926. In the method of JP-A-11-197855, the inclined rotary tool is moved in a circular path, but this movement is difficult. To achieve various kinds of circular or other loop paths, it is conceivable that the welding is carried out using a numeric control type machine tool. In this machine tool, the member to be subjected to the welding is fixed to a table, the rotary tool is installed on a main shaft, the main shaft is inclined, and the main shaft is moved in the circular path. However, to maintain a predetermined inclination angle of the main shaft in a circular movement direction, it is necessary to vary the inclination angle while moving the tool, so that preparation of programs is not easy.

### Summary of the Invention

An object of the present invention is to provide a friction stir welding method in which welding in a path of ring shape, e.g. circular shape, or a part ring or a circular arc, can be carried out easily.

According to the invention, there is provided a method of friction stir welding according to claim 1.

Preferred optional features of the invention as defined in claim 1 are set out in the dependent claims.

### Brief Description of the Drawings

Embodiments of the invention will now be described by way of non-limitative example with reference to the accompanying drawings, in which:
Fig. 1 is a side view of a friction stir welding apparatus of one embodiment according to the present invention;
Fig. 2 is a flow chart of a welding process of one embodiment according to the present invention;
Fig. 3 is a plan view of members before welding;
Fig. 4 is a longitudinal cross-sectional view of Fig. 3;
Fig. 5 is a plan view of the members after welding;
Fig. 6 is a cross-sectional view on line VI-VI of Fig. 5; and
Fig. 7 is the same cross-sectional view as Fig. 6, after one member has been partly cut off after the welding.

### Description of the Embodiments

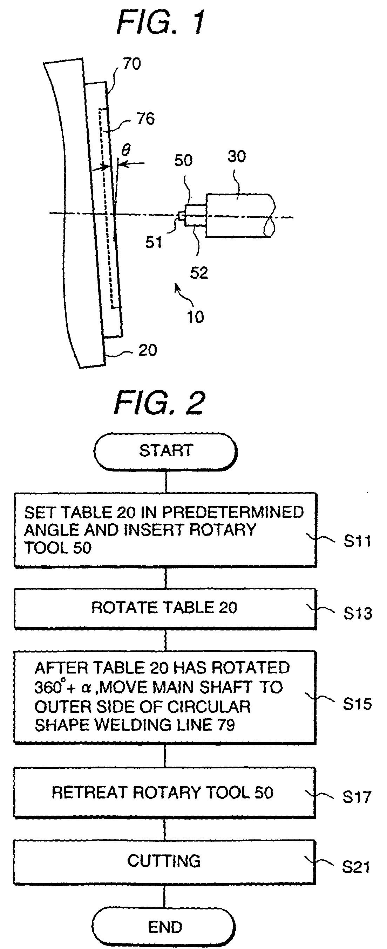

A friction stir welding method of one embodiment of the present invention will be explained referring to Figs. 1 to 7. Fig. 1 shows generally a numeric control type machine tool 10 typically called a machining centre. The machine tool 10 comprises a table 20 for mounting members to be subjected to welding, and a rotatable main shaft 30 for a tool to carry out the welding. The machine tool of the embodiment is a lateral axis type in which the axis of the main shaft 30 is horizontal. The face of the table 20 for mounting the members to be welded thus lies approximately vertical, but can be inclined. The table 20 can be rotated about its approximately horizontal central axis. In the invention alternatively the main shaft axis may be for example vertical.

On the tip end of the main shaft 30, a rotary cutter tool and a friction stir welding rotary tool 50 (shown in Fig. 1) can be installed. The tip end of the rotary tool 50 is directed at a side portion of the table 20. The main shaft 30 can move in its axial direction, and can move in a radial direction relative to the axial direction.

The machine tool 10 has a tool stocking device comprised of plural cutter tools and plural friction stir welding tools, and an automatic exchange device for exchanging a specified tool between the tool stocking device and the main shaft.

A member 70 to be subjected to welding is fixed to the table 20 in a conventional manner. The member 70 has a circular recess 71 at its side facing the main shaft 30. At the edge of the recess 71, there is a step 72. The step 72 and the front outer face of the member 70 adjacent the step are substantially parallel and flat and are perpendicular to the axis of the circular path to be welded.

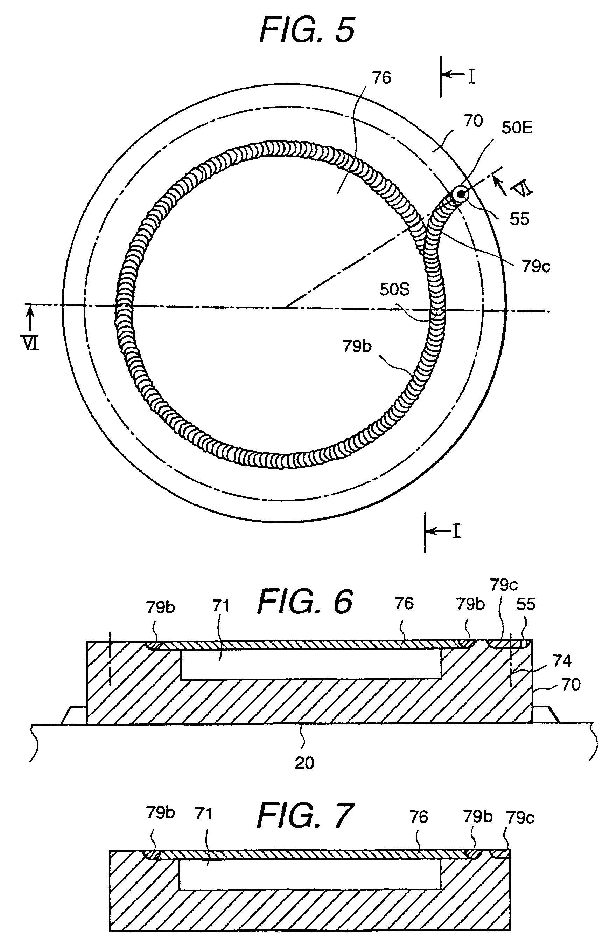

On the step 72 a circular plate-shape cover 76 is seated. The front outer face of the member 70 and the outer face of the cover 76 are flush (co-planar). A butt portion thus exists between the circular periphery of the cover 76 and the circular periphery of the step 72, at which the friction stir welding is performed. The welding line 79 is thus in a ring, specifically a circular shape. In Fig. 5 there is seen a welding bead 79b which is formed by the welding.

The butt portion between the member 70 and the cover 76 is first joined intermittently by temporary arc welding. After the temporary arc welding, the member 70 is fixed to the table 20 and the friction stir welding is carried out. After the friction stir welding, the space formed by the recess 71 and the cover 76 forms a cooling passage of a product being manufactured. An inlet and an outlet of the cooling passage are not shown. The member 70 and the cover 76 form a part of a cooling device. The materials of the member 70 and the cover 76 are aluminum alloys.

The table 20 can be rotated about the centre of the circular welding line 79 as a rotation centre. The rotary tool 50 fixed to the main shaft 30 does not move (rotate) in the circumferential direction of the welding line 79. By the rotation of the table 20, the rotary tool 50 can be moved relatively to the welding line 79.

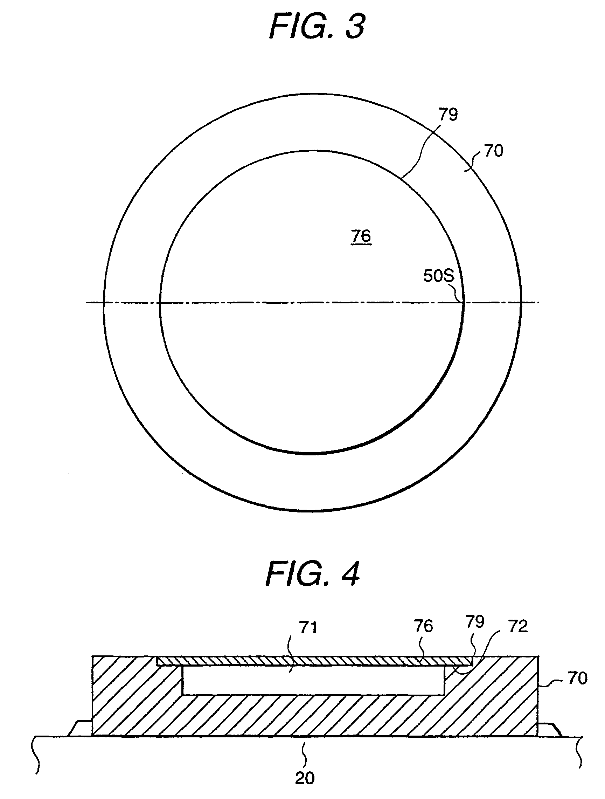

The rotary tool 50 fixed to the main shaft 30 is positioned at a position 50S which is one position in a horizontal direction of the welding line 79. At this position 50S, the table 20 is inclined with respect to the relative movement direction of the rotary tool 50 during the friction stir welding. The inclination direction is such that in this movement direction the pin 51 of the rotary tool 50 is in front of the shoulder 52 (more specifically the centre axis of the pin is generally forward with respect to the centre of the shoulder). When the table is made to the standard, in the rotation direction of the table 20, the small diameter portion 52 side of the axial centre of the rotary tool is to position in a rear position from the large diameter portion 51 side of the rotary tool 50. The inclination angle θ of the table 20 is three (3) degrees, for example. In Fig. 3 and Fig. 5, the rotary tool 50 is positioned in one of the horizontal positions 50S of the circular welding line 79, and since the table 20 is rotated clockwise, the upper side of the table 20 (the member 70) is inclined away relative to the lower side with respect to the rotary tool 50.

A welding process will be explained. The member 70, in which the cover 76 is fixed by the temporary welding, is fixed to the table 20 which is inclined at three degrees as described. The rotary tool 50 is positioned in the predetermined position 50S. While rotated on its own axis by the main shaft 30, the rotary tool 50 is advanced in the axial direction, to bring the pin 51 of the rotary tool 50 into the butt portion. When the rotary tool 50 is inserted by a predetermined amount the advance is stopped. The position 50S is the start point of the welding (step S11 in Fig. 2).

Next, while the inclination angle of 3 degrees is maintained, the table 20 is rotated. The rotation direction of the table 20 is the left-rotation (step S13). A centre of the rotation of the table 20 is a centre of the welding line 79. Accordingly, the rotating tool 50 is moved relatively along the welding line 79 and the butted portion is welded by circular path friction stir welding, to form the welding bead 79b.

The rotation of the table 20 is continued, even when the table 20 has rotated 360 degrees, so that from the start point 50S of the welding friction stir welding is carried out again. When the table 20 has rotated by a predetermined angle 360 degrees + α, the main shaft 30 is moved in the radial direction (step S15), to outside the circular welding line 79, while table 20 continues its rotation. The inclination angle θ of the table is not varied. Accordingly, an arc shape welding bead 79c is formed outside the line 79. The inclination angle θ of the rotary tool 50 with respect to the relative movement direction of the rotary tool 50 from the angle 360 degrees + α (from where the main shaft 30 starts move in the radial direction) must be the above stated three degrees. Herein, since this portion is not the portion to be subjected to the friction stir welding, normal precision friction stir welding is not required.

When the rotary tool 50 has moved to a predetermined position 50E, the main shaft 30 (with the rotary tool 50) is retreated and the tool 50 is withdrawn axially from the member 70. The retreat position of the main shaft 30 is judged in dependence on the movement of the main shaft 30, and is within the outer diameter of the member 70. At the position (the finish point of the welding) in which the rotary tool 50 is withdrawn from the member 70, a hole 55, which corresponds to an outer diameter of the pin 51 of the rotary tool 50, is left.

After the friction stir welding has finished, the member 70 is taken off, and by another machine tool an unwanted portion of the member 70 is cut off at the line 74 in Figs. 5 and 6 on a circle outside the circular welding line 79 (step S21). This removes the hole 55. Further, when burrs are formed at the welding portion, or recesses are produced, the upper face in Fig. 6 is processed e.g. by cutting or grinding. As a result, the hole 55 in the welding finish portion is removed, and the welded face is made flat so that a good product appearance can be obtained.

In this method, it is unnecessary to incline the rotary tool 50 and to move the rotary tool 50 in a circular path. Using a machine tool which cannot incline its main shaft 30, the friction stir welding can nevertheless be carried out. Further, even if the main shaft 30 is able to incline, it is not necessary to design a program for maintaining the predetermined angle θ in the circular path. Accordingly, by the present invention, using an existing machine tool, friction stir welding can be performed at low cost and easily.

The cutting of the workpiece after welding can be done as required. For example the hole 55 at the finish point of the welding may be penetrated by a drill, and the hole can be formed as a hole for a bolt or the like. Alternatively the hole 55 is buried by TIG (Tungsten Inert Gas) welding, and the welded face is cut off. The welding rod for the TIG welding may be of the same material as the member 50, so that the weld at the hole is hardly seen even if there is no coating.

At the side towards the main shaft 30, an optical sensor for detecting the position of the butt portion may be provided, and the output of this sensor used to move the main shaft 30. The moving direction of the main shaft 30 is perpendicular to the moving direction due to the rotation of the table 20. Accordingly, even if the accuracy of a first member 70 and of a second member 76 in the butt portion (the joining line 79) is poor, the axial centre of the rotary tool 50 can be positioned in the centre of the butt portion.

The welding line may be circular, a ring shape (continuous) curved line (which may include straight portions), a non-continuous circular line, and a non-continuous free curved line. In the case of the free curved line, the table 20 can be rotated with the centre of the circular arc of the welding portion as a centre and the table 20 may be moved in a linear manner. Since the machine tool is of the numeric control type, the welding can be carried out easily corresponding to the various curved lines. The hole 55 of the finish point of the welding in the case of the circular line may be buried by welding or soldering. Further, it is possible to perform a ring shape welding in which the welding line comprises for example four linear (straight) sides. In this case, for the welding of each of the four sides, the table is moved linearly. For the welding of the intersections of the sides or of small circular arc portions in the vicinity of the intersections, the table 20 is rotated.

Further, instead of welding of a butt portion, two members which are overlapped can be welded. A longitudinal type machine tool may be employed.

If the welding line has a finish point inside the circular welding line, for example, the inside portion may be removed by a counter boring process.

The rotary tool 50 is inclined relative to the moving direction, and the rotation for the relative movement is carried out by the table 20. Since the inclination of the rotary tool 50 and the circular movement of the rotary tool 50 are separated, the welding can be carried out at low cost and easily.

After completion of the friction stir welding, while the member 70 is still fixed to the table 20, the rotary tool 50 of the main shaft 30 may be exchanged for a rotary cutting tool, by an automatic exchanging device between the main shaft 30 and a tool stocking device. By rotating the cutting tool, an unnecessary portion of the workpiece is cut off. If the friction stir welding is carried out after such cutting, the oil for the cutting and the oil for cleaning after the cutting have a bad effect on the friction stir welding. Further, by the residual stock removal the combination accuracy in the two members may become poor. However, if the cutting is after the friction stir welding, these problems are avoided. If the cutting of the two members is carried out before the friction stir welding by another machine, however, the removal of the cutting use oil may be performed sufficiently. Instead of cutting, for example, there may be an enlargement to a desirable diameter of the hole 55 during the retreat of the rotary tool 50 and further a screw cutting process.

In another method, friction stir welding of a pair of the members is carried out using a first rotary tool, then the rotary tool is exchanged between the main shaft and the tool stocking device, and friction stir welding of a second welding portion of the members is carried out using a second rotary tool.

## Claims

1. A method of friction stir welding in which members (70,76) which are fixed to a support (20) and have at least partially co-planar surfaces terminating in mutually opposed edge surfaces, are friction stir welded progressively along a welding line (79) extending on said co-planar surfaces at said mutually opposed edge surfaces by means of a tool (50) rotating on an axis and inserted at said mutually opposed edge surfaces and having a small diameter end portion (51) and a large diameter portion (52) adjacent the end portion, both portions (51,52) being coaxial with said axis, wherein during the friction stir welding the axis of the tool (50) is inclined relative to the welding line (79) such that in the direction of the welding line (79) the end portion (51) is advanced with respect to the larger diameter portion (52), and during at least part of the friction stir welding said support (20) is rotated about a second axis which is perpendicular to said co-planar surfaces and is inclined relative to the axis of the rotary tool (50).

2. A method according to claim 1, wherein the rotation of the support (20) causes advance of the tool (5) along the welding line while maintaining constant the inclination of the axis of the tool (50) relative to the welding line.

3. A method according to claim 1 or 2, wherein the axis of the tool (50) is vertical or horizontal.

4. A method according to any one of claims 1 to 3, wherein the tool (50) is mounted on a tool drive shaft of a numeric control type machine tool (30).

5. A method according to any one of claims 1 to 4, wherein during the friction stir welding there is performed linear movement of said support (20) relative to the axis of the tool (50.), in addition to the rotary movement of the support (20).

6. A method according to claim 5, wherein the linear and rotary movements of the support (20) are independent or separate.

7. A method according to any one of claims 1 to 6, wherein the zone to be welded is detected by means of a sensor fixed relative to the axis of the tool, and the axis of the tool (50) and the support (20) are moved relatively to position the tool (50) in dependence on the sensor output.

8. A method according to any one of claims 1 to 7, wherein the axis of the tool (50) and the rotary axis of the support (20) are inclined to each other at an angle of not more than 10°.

9. A method according to claim 8, wherein the axis of the tool (50) and the rotary axis of the support (20) are inclined to each other at an angle in the range 1 to 5°.

10. A method according to any one of claims 1 to 9, wherein the welding line extends in a plane and the rotary axis of the support (20) is perpendicular to said plane.

## Patentansprüche

1. Reibrührschweißverfahren, in dem Elemente (70, 76), die an einem Träger (20) befestigt sind und wenigstens teilweise koplanare, in einander entgegengesetzten Kantenflächen endende Flächen aufweisen, fortlaufend längs einer Schweißlinie (79), die auf den koplanaren Flächen an den einander entgegengesetzten Kantenflächen verläuft, mittels eines Werkzeugs (50) reibrührgeschweißt werden, das um eine Achse rotiert, an den einander entgegengesetzten Kantenflächen eingesetzt ist und einen Endabschnitt (51) mit kleinem Durchmesser sowie einen Abschnitt (52) mit großem Durchmesser neben dem Endabschnitt aufweist, wobei beide Abschnitte (51, 52) koaxial zu der Achse stehen, und wobei während des Reibrührschweißens die Achse des Werkzeugs (50) relativ zu der Schweißlinie (79) geneigt ist, so daß der Endabschnitt (51) in Richtung der Schweißlinie (79) bezüglich des Abschnitts (52) mit größerem Durchmesser vorgeschoben ist, und der Träger (20) während wenigstens eines Teils der Reibrührschweißung um eine zweite Achse gedreht wird, die senkrecht zu den koplanaren Flächen steht und relativ zu der Achse des Drehwerkzeugs (50) geneigt ist.

2. Verfahren nach Anspruch 1, wobei die Drehung des Trägers (20) einen Vorschub des Werkzeugs (5) längs der Schweißlinie bewirkt, während die Inklination der Achse des Werkzeugs (50) relativ zu der Schweißlinie konstant gehalten wird.

3. Verfahren nach Anspruch 1 oder 2, wobei die Achse des Werkzeugs (50) vertikal oder horizontal ist.

4. Verfahren nach einem der Ansprüche 1 bis 3, wobei das Werkzeug (50) auf einer Werkzeugantriebswelle eines Maschinenwerkzeugs (30) mit numerischer Steuerung befestigt ist.

5. Verfahren nach einem der Ansprüche 1 bis 4, wobei während der Reibrührschweißung eine lineare Bewegung des Trägers (20) relativ zu der Achse des Werkzeugs (50) zusätzlich zu der Drehbewegung des Trägers (20) durchgeführt wird.

6. Verfahren nach Anspruch 5, wobei die lineare und die Drehbewegung des Trägers (20) unabhängig oder getrennt sind.

7. Verfahren nach einem der Ansprüche 1 bis 6, wobei der zu schweißende Bereich mittels eines relativ zu der Achse des Werkzeugs befestigten Sensors erfaßt und die Achse des Werkzeugs (50) und der Träger (20) relativ bewegt werden, um das Werkzeug (50) in Abhängigkeit von dem Sensor-Ausgabesignal zu bewegen.

8. Verfahren nach einem der Ansprüche 1 bis 7, wobei die Achse des Werkzeugs (50) und die Drehachse des Trägers (20) zueinander in einem Winkel von höchstens 10° geneigt sind.

9. Verfahren nach Anspruch 8, wobei die Achse des Werkzeugs (50) und die Drehachse des Trägers (20) zueinander in einem Winkel von 1° bis 5° geneigt sind.

10. Verfahren nach einem der Ansprüche 1 bis 9, wobei die Schweißlinie in einer Ebene verläuft, zu der die Drehachse des Trägers (20) senkrecht steht.

## Revendications

1. Procédé de soudage par friction-malaxage, dans lequel des éléments (70, 76) qui sont fixés sur un support (20) et qui ont des surfaces au moins partiellement coplanaires se terminant en des surfaces de bord mutuellement opposées, sont soudés par friction-malaxage de manière progressive le long d'une ligne de soudage (79) s'étendant sur lesdites surfaces coplanaires au niveau desdites surfaces de bord mutuellement opposées par l'intermédiaire d'un outil (50) tournant sur un axe et inséré au niveau desdites surfaces de bord mutuellement opposées, et ayant une partie d'extrémité de petit diamètre (51) et une partie de grand diamètre (52) adjacente à la partie d'extrémité, les parties (51, 52) étant coaxiales par rapport audit axe, dans lequel, pendant le soudage par friction-malaxage, l'axe de l'outil (50) est incliné par rapport à la ligne de soudage (79), de telle sorte que dans la direction de la ligne de soudage (79), la partie d'extrémité (51) est avancée par rapport à la partie de plus grand diamètre (52), et pendant au moins une partie du soudage par friction-malaxage, ledit support (20) est mis en rotation autour d'un second axe qui est perpendiculaire auxdites surfaces coplanaires et qui est inclinée par rapport à l'axe de l'outil rotatif (50).

2. Procédé selon la revendication 1, dans lequel la rotation du support (20) provoque l'avancée de l'outil (5) le long de la ligne de soudage, tout en maintenant constante l'inclinaison de l'axe de l'outil (50) par rapport à la ligne de soudage.

3. Procédé selon la revendication 1 ou 2, dans lequel l'axe de l'outil (50) est vertical ou horizontal.

4. Procédé selon l'une quelconque des revendications 1 à 3, dans lequel l'outil (50) est monté sur un arbre d'entraînement d'outil d'une machine-outil du type à commande numérique (30).

5. Procédé selon l'une quelconque des revendications 1 à 4, dans lequel, pendant le soudage par friction-malaxage, un déplacement linéaire dudit support (20) par rapport à l'axe de l'outil (50) est effectué, en plus du déplacement rotatif du support (20).

6. Procédé selon la revendication 5, dans lequel les déplacements linéaires et rotatifs du support (20) sont indépendants ou séparés.

7. Procédé selon l'une quelconque des revendications 1 à 6, dans lequel la zone devant être soudée est détectée par l'intermédiaire d'un capteur fixé par rapport à l'axe de l'outil, et l'axe de l'outil (50) et le support (20) sont déplacés de manière relative pour positionner l'outil (50) en fonction de la sortie de capteur.

8. Procédé selon l'une quelconque des revendications 1 à 7, dans lequel l'axe de l'outil (50) et l'axe de rotation du support (20) sont inclinés l'un par rapport à l'autre sur un angle qui n'est pas supérieur à 10°.

9. Procédé selon la revendication 8, dans lequel l'axe de l'outil (50) et l'axe de rotation du support (20) sont inclinés l'un par rapport à l'autre sur un angle situé dans la plage allant de 1 à 5°.

10. Procédé selon l'une quelconque des revendications 1 à 9, dans lequel la ligne de soudage s'étend dans un plan, et l'axe de rotation du support (20) est perpendiculaire audit plan.
